# EUROPÄISCHE PATENTSCHRIFT

(11) **EP 2 283 977 B1**
(45) Veröffentlichungstag und Bekanntmachung des Hinweises auf die Patenterteilung: **08.02.2017**
(21) Anmeldenummer: 10168427.2
(22) Anmeldetag: 05.07.2010
(51) Int. Cl.: B25D 17/00

(54) **Werkzeughalteeinrichtung für einen Bohrhammer**
Tool holder device for a hammer drill
Dispositif de retenue d'outil pour une perceuse

(30) Priorität: 14.08.2009 DE 102009028543
(43) Veröffentlichungstag der Anmeldung: 16.02.2011
(73) Patentinhaber: Robert Bosch GmbH, 70442 Stuttgart (DE)
(72) Erfinder: Lennartz, Juergen, 73760, Ostfildern (DE); Schlegel, Andreas, 70771, Leinfelden-Echterdingen (DE)

(56) Entgegenhaltungen:
- DE-A1-102006 016 804
- US-A1- 2006 233 622

## Beschreibung

Die Erfindung bezieht sich auf eine Werkzeughalteeinrichtung für einen Bohrhammer nach dem Oberbegriff des Anspruches 1.

### Stand der Technik

In der DE 10 2006 016 804 A1 wird ein Bohrhammer beschrieben, der in einem drehbar angeordneten Hammerrohr ein Einsatzwerkzeug aufnimmt, welches axial stirnseitig von einem Schlagbolzen beaufschlagt wird. Die axiale Arretierung des Einsatzwerkzeugs wird mithilfe einer Verriegelungskugel erreicht, die durch eine Aussparung im Hammerrohr hindurchragt und in Eingriff mit einer Nut am Schaft des Einsatzwerkzeuges steht. In dem Bohrhammer können verschiedenartig ausgeführte Einsatzwerkzeuge aufgenommen werden, beispielsweise ein Schrauber-Bit, ein Hex-Bohrer oder ein SDS-Bohrer, sofern die Einsatzwerkzeuge jeweils gleichartige Schaftteile aufweisen.

### Offenbarung der Erfindung

Der Erfindung liegt die Aufgabe zugrunde, einen Bohrhammer vielseitig einsetzbar auszubilden.

Diese Aufgabe wird erfindungsgemäß mit den Merkmalen des Anspruches 1 gelöst. Die Unteransprüche geben zweckmäßige Weiterbildungen an.

Die erfindungsgemäße Werkzeughalteeinrichtung für einen Bohrhammer umfasst einen drehend antreibbaren, ersten Werkzeughalter in einem Basisstecksystem zur Aufnahme eines Einsatzwerkzeugs und ein das Einsatzwerkzeug axial beaufschlagendes Schlagelement zur Realisierung der Bohrhammerfunktion. Die Werkzeughalteeinrichtung umfasst darüber hinaus ein Wechselfutter mit einem zweiten Werkzeughalter, wobei das Wechselfutter auf den ersten Werkzeughalter des Basisstecksystems lösbar aufsetzbar und drehfest verriegelbar ist. Des Weiteren ist vorgesehen, dass der erste Werkzeughalter im Basisstecksystem axial beidseitig offen ausgebildet ist, so dass über die freie Stirnseite ein Einsatzwerkzeug einsteckbar ist und die gegenüberliegende Stirnseite, welche ebenfalls offen ausgeführt ist, das Schlagelement bzw. ein mit dem Schlagelement zusammenwirkende Bauteils das Einsatzwerkzeug beaufschlagen kann.

Diese Vorrichtung weist den Vorteil auf, dass verschiedenartige Stecksysteme am Basisstecksystem sowie am Wechselfutter Verwendung finden können, so dass auch unterschiedlich geformte Schaftteile der Einsatzwerkzeuge im Bohrhammer eingesetzt werden können. So ist beispielsweise das Basisstecksystem zur Aufnahme von Schrauber-Bits ausgebildet, wohingegen das Wechselfutter bevorzugt zur Aufnahme von SDS-Werkzeugen ausgebildet ist. Die jeweiligen Werkzeugaufnahmen im Basisstecksystem und im Wechselfutter können sich ohne Einschränkung der Funktionalität des Bohrhammers voneinander unterscheiden.

Aufgrund des beidseitig offenen Werkzeughalters im Basisstecksystem kann das Schlagelement des Bohrhammers - ein Schlagbolzen oder ein Schläger - seine Wirkung bis zu dem optional aufgesetzten Wechselfutter und dem im Wechselfutter aufgenommenen Werkzeug entfalten. Das Schlagelement bzw. ein mit dem Schlagelement zusammenwirkendes Bauteil erstreckt sich durch den Werkzeughalter im Basisstecksystem hindurch, so dass der axiale Impuls des Schlagelements bis zum Einsatzwerkzeug im Wechselfutter übertragen werden kann. Dies ermöglicht eine Bohrhammerfunktion für Einsatzwerkzeuge, welche im Werkzeughalter des Wechselfutters aufgenommen sind. Zweckmäßigerweise ist auch der Werkzeughalter des Wechselfutters axial beidseitig offen ausgebildet, so dass das Schlagelement grundsätzlich auch durch die offene Seite des Werkzeughalters einragen und das darin aufgenommene Einsatzwerkzeug beaufschlagen kann.

Das Wechselfutter ist optional auf das Basisstecksystem aufzusetzen und mit diesem zu verriegeln. Die Drehbewegung der Antriebseinheit im Bohrhammer wird zunächst auf den ersten Werkzeughalter im Basisstecksystem übertragen und von diesem weiter auf das Wechselfutter bzw. den zweiten Werkzeughalter, welcher im Wechselfutter aufgenommen ist. Der erste Werkzeughalter dient zugleich zur Verbindung mit dem aufzusetzenden Wechselfutter.

Somit kommen dem ersten Werkzeughalter am Basisstecksystem mehrere Funktionen zu: Zum einen wird die Verbindung zum Wechselfutter hergestellt, zum andern wird die Drehbewegung der Antriebseinheit im Bohrhammer über den ersten Werkzeughalter auf den zweiten Werkzeughalter übertragen. Darüber hinaus dient der erste Werkzeughalter auch zur Aufnahme des Schlagelements bzw. eines damit zusammenwirkenden Bauteils, um die Schlagwirkung durch den ersten Werkzeughalter hindurch auf das Einsatzwerkzeug im zweiten Werkzeughalter des Wechselfutters übertragen zu können.

Da die Verbindung zwischen dem Basisstecksystem und dem Wechselfutter grundsätzlich über den ersten Werkzeughalter erfolgt, welcher Teil des Basisstecksystems ist, sind grundsätzlich darüber hinaus keine weiteren Verbindungsmaßnahmen erforderlich, wenngleich derartige zusätzliche Verbindungseinrichtungen gegebenenfalls vorgesehen sein können.

Für eine drehfeste Verbindung zwischen Basisstecksystem und Wechselfutter weist der erste Werkzeughalter im Basisstecksystem zweckmäßigerweise eine nicht-runde Außenkontur auf, insbesondere eine Mehrkantaußenkontur, die beispielsweise als Sechskant ausgeführt ist. Auf der zugewandten Seite befindet sich im Wechselfutter eine komplementär geformte Ausnehmung, die zur Verbindung zwischen Wechselfutter und Basisstecksystem auf den ersten Werkzeughalter aufsetzbar ist. Die nicht-runde Außenkontur des ersten Werkzeughalters erlaubt eine formschlüssige Verbindung zwischen Basisstecksystem und Wechselfutter in Umfangsrichtung und damit die Übertragung eines Drehmomentes um die Längsachse des Bohrhammers.

Um darüber hinaus auch eine axiale Sicherung des Wechselfutters am Basisstecksystem zu realisieren, ist zweckmäßigerweise in der Ausnehmung im Wechselfutter, welche auf den ersten Werkzeughalter am Basisstecksystem aufsetzbar ist, eine axiale Verriegelungseinrichtung angeordnet, die beispielsweise als Sprengring oder als Verriegelungskugel ausgebildet ist. Die Verriegelungseinrichtung ermöglicht einen Rastschluss zwischen Wechselfutter und Basisstecksystem, der durch entsprechende Kraftaufwendung wieder gelöst werden kann.

Das Schlagelement ist vorzugsweise durch einen Schlagbolzen gebildet, der seinerseits von einem Schläger betätigbar ist, welcher im Gehäuse des Bohrhammers aufgenommen ist. Das Schlagelement beaufschlagt gemäß einer weiteren zweckmäßigen Ausführung einen Schlagstift, der in den ersten Werkzeughalter einragt, welcher Bestandteil des Basisstecksystems ist. Der Schlagstift ist vorzugsweise Bestandteil des Wechselfutters und ragt in die Ausnehmung ein, die in das Wechselfutter eingebracht ist und die zur Aufnahme des ersten Werkzeughalters am Basisstecksystem dient. Über den Schlagstift, welcher von dem Schlagelement im Bohrhammer beaufschlagt wird, erfolgt eine Impulsübertragung auf das Einsatzwerkzeug, welches im zweiten Werkzeughalter des Wechselfutters aufgenommen ist. Der Schlagstift wird hierbei entweder unmittelbar von dem Schläger beaufschlagt oder von dem Schlagbolzen, der seinerseits von dem Schläger betätigt wird.

Damit im Wechselfutter optional eine ausschließliche Drehbewegung auf das dort eingesetzte Einsatzwerkzeug ohne Bohrhammerfunktion und ohne explizites Ausschalten der Bohrhammerfunktion wirksam ist, kann entweder ein Wechselfutter mit einer Ausnehmung verwendet werden, welche in Achsrichtung so groß ausgebildet ist, dass das Schlagelement im montierten Zustand des Wechselfutters nicht bis zu dem im Wechselfutter aufgenommenen Einsatzwerkzeug durchdringt. Möglich ist aber auch eine Ausführung mit lösbar in der Ausnehmung des Wechselfutters aufgenommenem Schlagstift, der aus der Ausnehmung herausgenommen werden kann, so dass das Übertragungselement zur Übertragung des Bohrhammerimpulses auf das Einsatzwerkzeug im Wechselfutter fehlt. Auf diese Weise können Werkzeugfunktionen mit und ohne Bohrhammerfunktion im aufgesetzten Wechselfutter realisiert werden, wobei die Bohrhammerbetätigung grundsätzlich eingeschaltet bleiben kann.

Grundsätzlich möglich ist auch entweder ein manuelles Zu- bzw. Abschalten der Bohrhammerfunktion oder eine automatisierte Zu- und Abschaltfunktion, beispielsweise dergestalt, dass mit dem Aufsetzen des Wechselfutters auf das Basisstecksystem die Bohrhammerfunktion automatisch eingeschaltet wird, falls in die Ausnehmung im Wechselfutter ein Schlagstift eingesetzt ist. Fehlt dagegen der Schlagstift, bleibt die Bohrhammerfunktion ausgeschaltet.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung eine als Basisstecksystem ausgeführte Werkzeughalteeinrichtung für einen Bohrhammer, mit einem Schlagbolzen und mit einem stirnseitig am Basisstecksystem angeordneten ersten Werkzeughalter zur Aufnahme eines Einsatzwerkzeugs,
- Fig. 2: der erste Werkzeughalter am Basisstecksystem in Draufsicht,
- Fig. 3: die Werkzeughalteeinrichtung aus Fig. 1 mit eingestecktem Einsatzwerkzeug,
- Fig. 4: eine Werkzeughalteeinrichtung für einen Bohrhammer mit einem auf das Basisstecksystem aufgesteckten Wechselfutter, wobei das Wechselfutter einen zweiten Werkzeughalter zur Aufnahme eines Einsatzwerkzeugs aufweist,
- Fig. 5: eine Ausführungsvariante, bei der ein Schlagstift in eine Ausnehmung im Wechselfutter eingesetzt ist, wobei das Wechselfutter mit der Ausnehmung auf den ersten Werkzeughalter an der Stirnseite des Basisstecksystems aufsetzbar ist und wobei der Schlagstift von einem Schläger im Bohrhammer axial beaufschlagt wird,
- Fig. 6: eine ähnliche Ausführungsvariante wie Fig. 4, bei der jedoch der Schlagstift in der Ausnehmung des Wechselfutters von einem Schlagbolzen betätigt wird,
- Fig. 7: eine weitere Ausführungsvariante, bei der der Schlagstift in der Ausnehmung des Wechselfutters fehlt, so dass die Bohrhammerfunktion nicht auf das Einsatzwerkzeug im Wechselfutter übertragen wird,
- Fig. 8: eine weitere Ausführungsvariante, die ähnlich wie Fig. 6 aufgebaut ist, bei der jedoch der Schlagbolzen in den Werkzeughalter und in das Wechselfutter einragt.

In den Figuren sind gleiche Bauteile mit gleichen Bezugszeichen versehen.

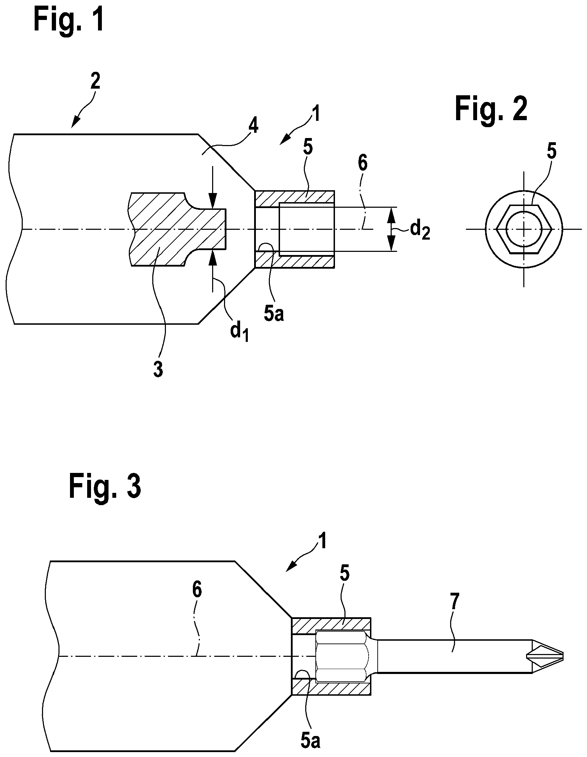

Fig. 1 zeigt eine Werkzeughalteeinrichtung 1, die an einer Stirnseite eines Bohrhammers 2 angeordnet ist und eine Drehbewegung um die Bohrhammer-Längsachse 6 ausführen kann. Der Bohrhammer weist als Schlagelement einen Schlagbolzen 3 auf, der im Betrieb eine axiale Schlagbewegung in Richtung der Längsachse 6 ausführt, wobei die Schlagbewegung auf ein Einsatzwerkzeug 7 übertragbar ist, das in einem ersten Werkzeughalter 5 an der Stirnseite des Basisstecksystems 4 aufgenommen ist. Der Werkzeughalter 5 des Basisstecksystems 4 in Form einer Aufnahmehülse bildet ein Hammerrohr und ist auf der dem Schlagbolzen 3 zugewandten Seite offen ausgebildet, so dass die Stirnseite des Schlagbolzens 3 die hintere axiale Stirnseite des Einsatzwerkzeuges 7 beaufschlagen kann. Mit eingeschalteter Bohrhammerfunktion übt somit das Einsatzwerkzeug 7 im Werkzeughalter 5 sowohl eine Drehbewegung als auch eine axiale Bohrhammerbewegung aus.

In Fig. 2 ist der Werkzeughalter 5 an der Spitze des Basisstecksystems 4 in Draufsicht dargestellt. Die Innenkontur des Werkzeughalters 5 ist als Sechskant zur Aufnahme eines Einsatzwerkzeuges ausgeführt, die Außenkontur weist einen nicht-runden Querschnitt auf. Der Werkzeughalter 5 eignet sich insbesondere zur Aufnahme von Schrauber-Bits.

Der Werkzeughalter 5 weist, wie Fig. 1 weiter zu entnehmen, auf der dem Basisstecksystem 4 zugewandten Seite eine Innenschulter 5a mit einem Durchmesser d₂ auf, der geringfügig größer ist als der Durchmesser d₁ der zugewandten Spitze des Schlagbolzens 3, welche im Bohrhammerbetrieb phasenweise in den Werkzeughalter 5 einragt. Die Schulter 5a bildet außerdem einen Anschlag zur axialen Begrenzung beim Einführen des Einsatzwerkzeugs 7 in den Werkzeughalter 5, was in Fig. 3 dargestellt ist.

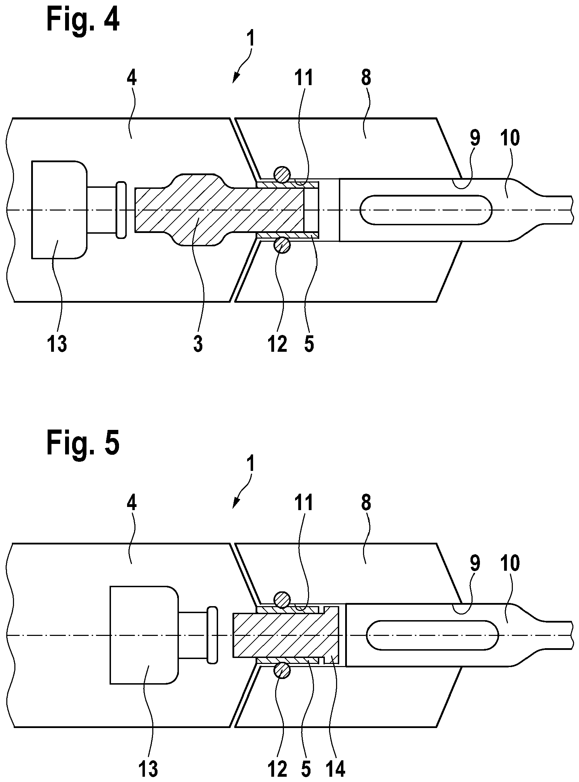

In Fig. 4 ist auf das Basisstecksystem 4 ein Wechselfutter 8 aufgesetzt, welches gemeinsam mit dem Basisstecksystem die Werkzeughalteeinrichtung 1 bildet.

Das Wechselfutter 8 ist mit einem Werkzeughalter 9 versehen, in den ein Einsatzwerkzeug 10 lösbar eingesetzt ist. Auf der axial gegenüberliegenden Seite ist in das Wechselfutter 8 eine Ausnehmung 11 eingebracht, die im zusammengesetzten Zustand auf den ersten Werkzeughalter 5 des Basisstecksystems 4 aufgesetzt ist. Zweckmäßigerweise ist die Innenkontur der Ausnehmung 11 an die Außenkontur des Werkzeughalters 5 angepasst, so dass in Drehrichtung ein Formschluss zwischen Werkzeughalter 5 und Wechselfutter 8 gegeben ist und die Drehbewegung des Basisstecksystems 4 auch auf das Wechselfutter 8 übertragen wird. Zur axialen Arretierung ist im Bereich der Ausnehmung 11 eine bzw. sind mehrere Verriegelungskugeln 12 vorgesehen, die Rastelemente zur Sicherung des Wechselfutters 8 auf dem ersten Werkzeughalter 5 bilden.

Der Schlagbolzen 3 ist in einem Zustand dargestellt, in welchem der vordere Abschnitt des Schlagbolzens in den Werkzeughalter 5 axial einragt. Der Schlagbolzen 3 wird von einem Schläger 13 betätigt, welcher im Bohrhammer aufgenommen ist. Die Schlagbewegung des Schlagbolzens 3 wird über die axiale Stirnseite des Schlagbolzens auf das Einsatzwerkzeug 10 übertragen.

Bei dem Einsatzwerkzeug 10 handelt es sich beispielsweise um einen SDS-Bohrer. Es ist grundsätzlich möglich, den Werkzeughalter 5 im Basisstecksystem 4 und den Werkzeughalter 9 im Wechselfutter 8 unterschiedlich auszubilden, um unterschiedliche Einsatzwerkzeuge im Basisstecksystem 4 und im Wechselfutter 8 aufnehmen zu können.

Im Ausführungsbeispiel nach Fig. 5 ist ebenfalls ein Wechselfutter 8 auf das Basisstecksystem 4 aufgesetzt. Das Wechselfutter 8 weist wie im vorangegangenen Ausführungsbeispiel eine axiale Ausnehmung 11 auf, die auf den ersten Werkzeughalter 5 im Basisstecksystem 4 aufgesetzt ist. Des Weiteren ist ein Schlagstift 14 am Wechselfutter 8 gehalten, der in die Ausnehmung 11 einragt, jedoch gegenüber der Ausnehmung 11 einen kleineren Durchmesser aufweist. Im montierten Zustand erstreckt sich der Schlagstift 14 in das Innere des ersten Werkzeughalters 5 am Basisstecksystem 4, wobei die freie Stirnseite des Schlagstiftes dem Schläger 13 des Bohrhammers zugewandt ist und im Bohrhammerbetrieb von dem Schläger 13 axial beaufschlagt wird. Der Schlagstift 14 kann sowohl im ersten Werkzeughalter 5 als auch gegenüber dem Wechselfutter 8 eine axiale Stellbewegung ausführen und überträgt im Bohrhammerbetrieb die Schlagbewegung des Schlägers 13 auf das Einsatzwerkzeug 10, welches im zweiten Werkzeughalter 9 im Wechselfutter 8 aufgenommen ist.

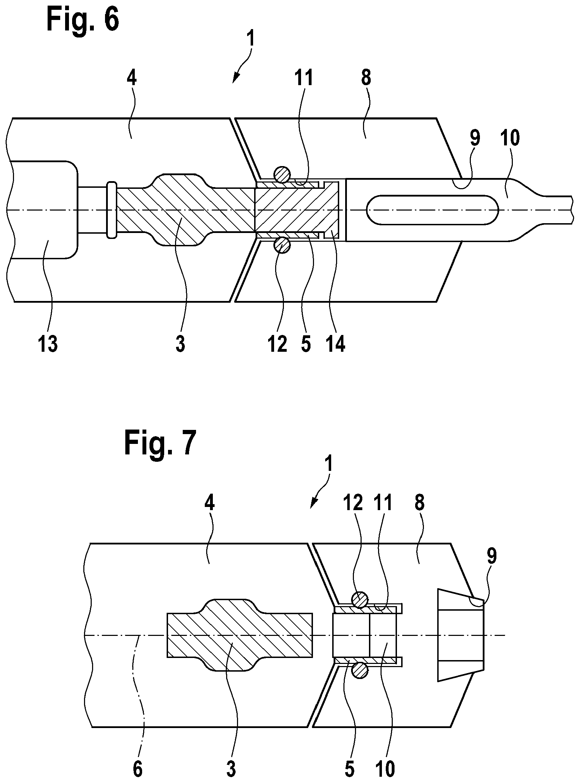

Das Ausführungsbeispiel nach Fig. 6 entspricht weitgehend demjenigen nach Fig. 5, jedoch mit dem Unterschied, dass der Schlagstift 14, welcher am Wechselfutter 8 gehalten ist und im montierten Zustand in den ersten Werkzeughalter 5 am Basisstecksystem 4 einragt, im Bohrhammerbetrieb von dem Schlagbolzen 3 beaufschlagt wird. Der Schlagbolzen 3 wird seinerseits von dem Schläger 13 betätigt.

Im Ausführungsbeispiel gemäß Fig. 7 fehlt der Schlagstift am Wechselfutter 8. Zudem ist die axiale Erstreckung der Ausnehmung 11 im Wechselfutter 8 so ausgeführt, dass der Schlagbolzen 3 die axial hintere Stirnseite des Einsatzwerkzeugs 10 nicht erreicht. Auf diese Weise ist sichergestellt, dass trotz eingeschalteter Bohrhammerfunktion das Einsatzwerkzeug 10 von dem Schlagbolzen 3 unbeeinflusst bleibt und lediglich eine Drehbewegung, jedoch keine Bohrhammerbewegung ausübt.

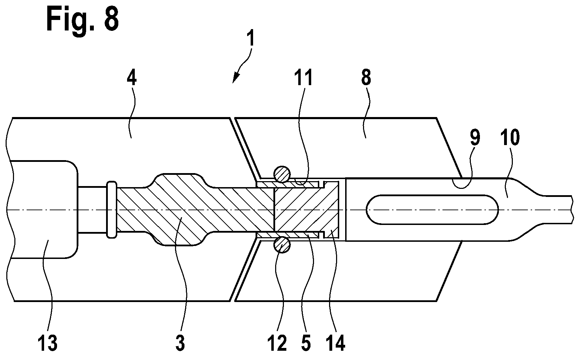

Das Ausführungsbeispiel gemäß Fig. 8 entspricht im Wesentlichen demjenigen nach Fig. 6, so dass insoweit auf die dortige Beschreibung verwiesen wird. Bei Fig. 8 ragt jedoch der Schlagbolzen 3 axial in den Werkzeughalter 5 ein und befindet sich somit zugleich axial im Wechselfutter 8. Auf diese Weise wird vermieden, dass im Schlagbohrbetrieb die Stirnseite des Schlagbolzens 3 versehentlich gegen die Stirnseite des Werkzeughalters 5 anschlägt.

## Patentansprüche

1. Werkzeughalteeinrichtung für einen Bohrhammer (2), mit einem drehend antreibbaren Werkzeughalter (5, 9) zur Aufnahme eines Einsatzwerkzeugs (7) und einem das Einsatzwerkzeug (7) axial beaufschlagenden Schlagelement, **dadurch gekennzeichnet, dass** die Werkzeughalteeinrichtung (1) ein Basisstecksystem (4) mit einem ersten Werkzeughalter (5) umfasst und dass auf den ersten Werkzeughalter (5) ein Wechselfutter (8) mit einem zweiten Werkzeughalter (9) lösbar aufsetzbar und drehfest verriegelbar ist, wobei der erste Werkzeughalter (5) im Basisstecksystem (4) axial beidseitig offen ausgebildet ist zur Aufnahme des Schlagelements oder eines mit dem Schlagelement zusammenwirkenden Bauteils.

2. Werkzeughalteeinrichtung nach Anspruch 1, **dadurch gekennzeichnet, dass** der Werkzeughalter (5) im Basisstecksystem (4) eine nicht-runde Außenkontur, insbesondere eine Mehrkant-Außenkontur zur formschlüssigen Drehverbindung mit dem Wechselfutter (8) aufweist, das eine entsprechend ausgebildete, stirnseitige Ausnehmung (11) aufweist.

3. Werkzeughalteeinrichtung nach Anspruch 1 oder 2, **dadurch gekennzeichnet, dass** das Schlagelement ein Schlagbolzen (3) ist, der von einem Schläger (13) betätigbar ist und in den Werkzeughalter (5) im Basisstecksystem (4) einragt.

4. Werkzeughalteeinrichtung nach einem der Ansprüche 1 bis 3, **dadurch gekennzeichnet, dass** das Schlagelement einen Schlagstift (14) beaufschlagt, der in den Werkzeughalter (5) im Basisstecksystem (4) einragt.

5. Werkzeughalteeinrichtung nach Anspruch 4, **dadurch gekennzeichnet, dass** das Schlagelement (13) einen Schlagbolzen (3) und den in den Werkzeughalter (5) im Basisstecksystem (4) einragenden Schlagstift (14) beaufschlagt.

6. Werkzeughalteeinrichtung nach Anspruch 4 oder 5, **dadurch gekennzeichnet, dass** der Schlagstift (14) im Wechselfutter (8) aufgenommen ist.

7. Werkzeughalteeinrichtung nach einem der Ansprüche 4 bis 6, **dadurch gekennzeichnet, dass** der Werkzeughalter (5, 9) im Wechselfutter (8) auf der dem Basisstecksystem (4) zugewandten Seite axial offen ausgebildet ist und der Schlagstift (14) ein Einsatzwerkzeug (7) im Werkzeughalter (9) im Wechselfutter (8) beaufschlagt.

8. Werkzeughalteeinrichtung nach einem der Ansprüche 4 bis 7, **dadurch gekennzeichnet, dass** der Schlagstift (14) von einem Schlagbolzen (3) betätigbar ist.

9. Werkzeughalteeinrichtung nach einem der Ansprüche 4 bis 8, **dadurch gekennzeichnet, dass** der Schlagstift (14) von einem Schläger (13) betätigbar ist.

10. Werkzeughalteeinrichtung nach einem der Ansprüche 1 bis 9, **dadurch gekennzeichnet, dass** in der Ausnehmung (11) im Wechselfutter (8), die auf den ersten Werkzeughalter (5) im Basisstecksystem (4) aufsetzbar ist, eine axiale Verriegelungseinrichtung angeordnet ist.

11. Werkzeughalteeinrichtung nach Anspruch 10, **dadurch gekennzeichnet, dass** die axiale Verriegelungseinrichtung als Sprengring oder Verriegelungskugel (12) ausgebildet ist.

12. Werkzeughalteeinrichtung nach einem der Ansprüche 1 bis 11, **dadurch gekennzeichnet, dass** der Schlagstift (14) von einem Schlagbolzen (3) betätigbar ist.

13. Werkzeughalteeinrichtung nach einem der Ansprüche 1 bis 12, **dadurch gekennzeichnet, dass** der Werkzeughalter (5) im Basisstecksystem (4) zur Aufnahme von Bits ausgebildet ist.

14. Bohrhammer mit einer Werkzeughalteeinrichtung (1) nach einem der Ansprüche 1 bis 13.

## Claims

1. Tool-holding device for a hammer drill (2), with a rotatably driveable tool holder (5, 9) for receiving an insert tool (7) and with a striking element which acts axially on the insert tool (7), **characterized in that** the tool-holding device (1) comprises a base plug system (4) with a first tool holder (5), and **in that** an interchangeable chuck (8) with a second tool holder (9) can be releaseably placed on the first tool holder (5) and locked in a rotationally fixed manner, wherein the first tool holder (5) in the base plug system (4) is designed to be axially open on both sides in order to receive the striking element or a component interacting with the striking element.

2. Tool-holding device according to Claim 1, **characterized in that** the tool holder (5) in the base plug system (4) has a non-round outer contour, in particular a polygonal outer contour for positive rotatory connection with the interchangeable chuck (8), which has a correspondingly formed end aperture (11).

3. Tool-holding device according to Claim 1 or 2, **characterized in that** the striking element is a striking bolt (3) which can be actuated by a striker (13) and projects into the tool holder (5) in the base plug system (4).

4. Tool-holding device according to one of Claims 1 to 3, **characterized in that** the striking element acts on a striking pin (14) which projects into the tool holder (5) in the base plug system (4).

5. Tool-holding device according to Claim 4, **characterized in that** the striking element (13) acts on a striking bolt (3) and the striking pin (14) which projects into the tool holder (5) in the base plug system (4).

6. Tool-holding device according to Claim 4 or 5, **characterized in that** the striking pin (14) is received in the interchangeable chuck (8).

7. Tool-holding device according to one of Claims 4 to 6, **characterized in that** the tool holder (5, 9) in the interchangeable chuck (8) is designed to be axially open on the side facing the base plug system (4), and the striking pin (14) acts on an insert tool (7) in the tool holder (9) in the interchangeable chuck (8).

8. Tool-holding device according to one of Claims 4 to 7, **characterized in that** the striking pin (14) can be actuated by a striking bolt (3).

9. Tool-holding device according to one of Claims 4 to 8, **characterized in that** the striking pin (14) can be actuated by a striker (13).

10. Tool-holding device according to one of Claims 1 to 9, **characterized in that** an axial locking device is arranged in the aperture (11) in the interchangeable chuck (8), which aperture can be placed on the first tool holder (5) in the base plug system (4).

11. Tool-holding device according to Claim 10, **characterized in that** the axial locking device is designed as a snap ring or locking ball (12).

12. Tool-holding device according to one of Claims 1 to 11, **characterized in that** the striking pin (14) can be actuated by a striking bolt (3).

13. Tool-holding device according to one of Claims 1 to 12, **characterized in that** the tool holder (5) in the base plug system (4) is designed to receive bits.

14. Hammer drill having a tool-holding device (1) according to one of Claims 1 to 13.

## Revendications

1. Dispositif de retenue d'outil pour une perceuse à percussion (2), avec un porte-outil (5, 9) pouvant être entraîné en rotation pour le montage d'un outil amovible (7) et un élément percuteur frappant axialement l'outil amovible (7), **caractérisé en ce que** le dispositif de retenue d'outil (1) comprend un système d'engagement de base (4) avec un premier porte-outil (5) et **en ce qu'**un mandrin interchangeable (8) avec un deuxième porte-outil (9) peut être monté de façon séparable et verrouillé en rotation sur le premier porte-outil (5), dans lequel le premier porte-outil (5) est ouvert axialement de part et d'autre dans le système d'engagement de base (4) pour le montage de l'élément percuteur ou d'une pièce coopérant avec l'élément percuteur.

2. Dispositif de retenue d'outil selon la revendication 1, **caractérisé en ce que** le porte-outil (5) présente dans le système d'engagement de base (4) un contour extérieur non rond, en particulier un contour extérieur polygonal pour la liaison de rotation par emboîtement avec le mandrin interchangeable (8), qui présente un évidement frontal (11) de forme correspondante.

3. Dispositif de retenue d'outil selon la revendication 1 ou 2, **caractérisé en ce que** l'élément percuteur est un boulon percuteur (3), qui peut être actionné par un percuteur (13) et qui pénètre dans le porte-outil (5) dans le système d'engagement de base (4).

4. Dispositif de retenue d'outil selon l'une quelconque des revendications 1 à 3, **caractérisé en ce que** l'élément percuteur frappe une tige de percussion (14), qui pénètre dans le porte-outil (5) dans le système d'engagement de base (4).

5. Dispositif de retenue d'outil selon la revendication 4, **caractérisé en ce que** l'élément percuteur (13) frappe un boulon percuteur (3) et la tige de percussion (14) pénétrant dans le porte-outil (5) dans le système d'engagement de base (4).

6. Dispositif de retenue d'outil selon la revendication 4 ou 5, **caractérisé en ce que** la tige de percussion (14) est logée dans le mandrin interchangeable (8).

7. Dispositif de retenue d'outil selon l'une quelconque des revendications 4 à 6, **caractérisé en ce que** le porte-outil (5, 9) dans le mandrin interchangeable (8) est axialement ouvert sur le côté tourné vers le système d'engagement de base (4) et la tige de percussion (14) frappe un outil amovible (7) dans le porte-outil (9) dans le mandrin interchangeable (8).

8. Dispositif de retenue d'outil selon l'une quelconque des revendications 4 à 7, **caractérisé en ce que** la tige de percussion (14) peut être actionnée par un boulon percuteur (3).

9. Dispositif de retenue d'outil selon l'une quelconque des revendications 4 à 8, **caractérisé en ce que** la tige de percussion (14) peut être actionnée par un percuteur (13).

10. Dispositif de retenue d'outil selon l'une quelconque des revendications 1 à 9, **caractérisé en ce qu'**un dispositif de verrouillage axial est disposé dans l'évidement (11) dans le mandrin interchangeable (8), qui peut être placé sur le premier porte-outil (5) dans le système d'engagement de base (4).

11. Dispositif de retenue d'outil selon la revendication 10, **caractérisé en ce que** le dispositif de verrouillage axial est réalisé sous la forme d'un circlips ou d'une bille de verrouillage (12).

12. Dispositif de retenue d'outil selon l'une quelconque des revendications 1 à 11, **caractérisé en ce que** la tige de percussion (14) peut être actionnée par un boulon percuteur (3).

13. Dispositif de retenue d'outil selon l'une quelconque des revendications 1 à 12, **caractérisé en ce que** le porte-outil (5) dans le système d'engagement de base (4) est réalisé en vue de recevoir des outils de forage.

14. Perceuse à percussion avec un dispositif de retenue d'outil (1) selon l'une quelconque des revendications 1 à 13.
